# NEUE EUROPÄISCHE PATENTSCHRIFT

(11) **EP 2 384 295 B2**
(45) Veröffentlichungstag und Bekanntmachung des Hinweises auf die Entscheidung über den Einspruch: **12.06.2019**
(45) Hinweis auf die Patenterteilung: 25.09.2013
(21) Anmeldenummer: 09751871.6
(22) Anmeldetag: 03.11.2009
(51) Int. Cl.: B60S 1/08

(54) **KAMERAANORDNUNG UND VERFAHREN ZUR ERFASSUNG EINER FAHRZEUGUMGEBUNG**
CAMERA SYSTEM AND METHOD FOR CAPTURING THE SURROUNDINGS OF A VEHICLE
AGENCEMENT DE CAMÉRA ET PROCÉDÉ DE DÉTECTION DE L'ENVIRONNEMENT D'UN VÉHICULE

(30) Priorität: 02.01.2009 DE 102009000005
(43) Veröffentlichungstag der Anmeldung: 09.11.2011
(73) Patentinhaber: Robert Bosch GmbH, 70442 Stuttgart (DE)
(72) Erfinder: SEGER, Ulrich, 71229 Leonberg-Warmbronn (DE); FRANZ, Gerald, 71522 Backnang (DE)
(86) Internationale Anmeldenummer: PCT/EP2009/064488
(87) Internationale Veröffentlichungsnummer: WO 2010/076064

(56) Entgegenhaltungen:
- EP-A- 1 777 943
- EP-A2- 1 580 092
- WO-A-2006/015905
- DE-A1-102004 015 040
- DE-A1-102006 008 274
- US-A1- 2005 206 511

## Beschreibung

### Stand der Technik

Kameras in Fahrzeugen zur Erfassung einer Fahrzeugumgebung können insbesondere im Rahmen von Fahrerassistenzsystemen eingesetzt werden für Funktionen wie Nachtsichtunterstützung, Spurverlassenswarnung, Verkehrszeichenerkennung, Lichtassistent und/oder Rückfahrhilfe.

Weiterhin ist es bekannt, Kameras in Fahrzeugen für Regensensorsysteme einzusetzen. Die DE 197 49 33 A1 offenbart ein Verfahren und eine Kamera zum Detektieren von auf einer Windschutzscheibe eines Kraftfahrzeuges befindlichen Objekten wie Wassertropfen oder sonstigen Verschmutzungen. Die Kamera ist hinter der Windschutzscheibe angeordnet und auf die Außenseite der Windschutzscheibe fokussiert.

Des Weiteren sind Kameraanordnungen bekannt, die sowohl für die Aufnahme einer Fahrzeugumgebung eines Fahrzeuges als auch die Erfassung eines Scheibenzustandes einer Fahrzeugscheibe geeignet sind. Eine derartige Kameraanordnung ist in der DE 10 2004 015 040 A1 gezeigt. Diese Kameraanordnung umfasst eine Kamera und eine Strahlungsquelle, wobei die Kamera einen Bildsensor zum Aufnehmen von Bildern aufweist, mittels dem eine von der Fahrzeugumgebung erzeugte erste optische Strahlung erfassbar ist, und mittels der Strahlungsquelle eine zweite optische Strahlung erzeugt wird, die durch den Bildsensor erfasst wird. Die durch den Bildsensor erfasste zweite optische Strahlung ist abhängig von dem Scheibenzustand, insbesondere von einer Benetzung der Scheibe durch Regentropfen. Um eine solche Abhängigkeit zu erzeugen, wird die von der Strahlungsquelle abgegebene zweite optische Strahlung in das Innere der Fahrzeugscheibe derart eingekoppelt, dass diese im unbenetzten Zustand der Fahrzeugscheibe eine oder mehrere Totalreflexionen ausführt, bevor ein Teil der zweiten optischen Strahlung in die Kamera eingekoppelt wird. Durch Benetzung der Oberfläche der Fahrzeugscheibe reduziert sich die Totalreflexion und damit die Intensität der vom Bildsensor erfassbaren zweiten optischen Strahlung. Die Messung dieser Reduktion kann dazu verwendet werden, die Benetzung der Fahrzeugscheibe zu ermitteln.

Gemäß der DE 10 2004 015 040 A1 wird das Strahlbündel der zweiten optischen Strahlung, das auf den Bildsensor trifft, derart geformt, dass nur ein kleiner Teilbereich einer Sensorfläche des Bildsensors mit der zweiten optischen Strahlung bestrahlbar ist. Die von diesem Teilbereich erfassten Bilddaten werden dazu verwendet, den Scheibenzustand zu bestimmen. Der restliche Bereich der Sensorfläche des Bildsensors wird für die Aufnahme der Fahrzeugumgebung verwendet. Der Teilbereich des Bildsensors, der mit zweiter optischer Strahlung bestrahlbar ist, wird durch eine Blende derart verdeckt, dass von der Fahrzeugumgebung stammende erste optische Strahlung abgeblockt wird und nicht auf diesen Teilbereich treffen kann. Eine derartige Kameraanordnung erfordert eine genaue Führung der zweiten optischen Strahlung, damit diese nicht den Teilbereich der Sensorfläche bestrahlt, der für die Erfassung der Fahrzeugumgebung vorgesehen ist. Des Weiteren wird durch das Vorsehen einer Blende der Anteil der Sensorfläche des Bildsensors, der für das Erfassen einer Fahrzeugumgebung, also erster optischer Strahlung, zur Verfügung steht, reduziert. Eine Blende bedeutet zudem ein zusätzliches Element für die Kameraanordnung.

Die US2005/0206511A beschreibt eine Regendetektions-Vorrichtung, bei der eine Kamera in einem Fahrzeug auf eine Vielzahl von Abständen fokussiert wird und hierbei eine Scheibenaußenfläche einer Fahrzeugscheibe erfasst. Ein Prozessor ermittelt aus Differenzen der Bilddaten verschiedener Bilder Kanten. Ergänzend ist eine Lampe vorgesehen, die zeitweise Licht durch die Scheibe ausgibt, um die Erkennbarkeit der Kanten von Regentropfen zu verbessern, wobei das von der Lampe ausgesandte Licht teilweise von der Kamera erfasst wird.

Die WO03097420A1 offenbart eine Kamera, die neben der Umgebung des Fahrzeugs ebenso das an Regentropfen auf der Scheibe gestreute IR-Licht einer entsprechend ausgerichteten Lichtquelle erfasst. Die IR-Lichtquelle wird dabei gepulst bestrieben.

Die DE 10 2006 008 274 A1 offenbart ein Verfahren, in welchem ein erstes und ein zweites Zeitfenster zum Erfassen von Strahlung vorgesehen sind, wobei im ersten Zeitfenster mittels eines Bildsensors die Umgebung erfasst wird und in einem zweiten Zeitfenster eine mit Hilfe einer gepulsten Lichtquelle erzeugte Strahlung erfasst wird, welche zur Erfassung von Witterungsbedingungen verwendet wird.

Die EP 1580092A2 offenbart ein Verfahren, in welchem mittels einer von einem Bildsensor erfassten ersten optischen Strahlung eine Fahrzeugumgebung und mittels einer zweiten optischen Strahlung der Scheibenzustand ermittelt wird. Die zweite optische Strahlung wird hierbei derart umgelenkt, dass sie auf einen separaten Teilbereich des Bildsensors trifft.

Die DE 10 2006 010 671 A1 offenbart ein Verfahren, in welchem auf einer Abbildungsebene einer Kamera ein Außenbereich eines Fahrzeugs erfasst und auf einem separaten Teil der Abbildungsebene eine mittels einer Lichtquelle erzeugte Strahlung empfangen werden kann. Mittels der ermittelten Lichtintensität der erfassten Strahlung der Lichtquelle wird eine Benetzung einer Fahrzeugscheibe festgestellt.

Die US 20050206511A offenbart ein Verfahren zur Erfassung einer Fahrzeugumgebung, bei dem mittels eines Bildsensors eine von der Fahrzeugumgebung erzeugte erste optische Strahlung erfasst wird und mittels einer Strahlungsquelle eine zweite optische Strahlung erzeugt und durch die Fahrzeugscheibe geleitet wird, wobei durch den Bildsensor ein Teil der zweiten optischen Strahlung erfasst wird, der abhängig von dem Scheibenzustand ist.

### Offenbarung der Erfindung

Erfindungsgemäß sind eine Kameraanordnung und ein Verfahren zur Erfassung einer Fahrzeugumgebung vorgesehen, die weiterhin auch eine Bestimmung eines Scheibenzustandes der Fahrzeugscheibe ermöglichen. Hierbei weist die Kamera einen Bildsensor mit einer Sensorfläche auf, die einen ersten Teilbereich aufweist, der sowohl die erste optische Strahlung als auch die zweite optische Strahlung erfasst.

Der erste Teilbereich der Sensorfläche ermöglicht es, durch die Belichtung mit erster optischer Strahlung eine Fahrzeugumgebung zu erfassen. Eine Störung durch eine Überlagerung mit zweiter optischer Strahlung kann aufgrund der zeitlich versetzten Belichtung vermieden werden. Die durch Belichtung eines zweiten Teilbereichs mit zweiter optischer Strahlung erzeugten Bilddaten können somit für die Bestimmung des Scheibenzustandes ausgewertet werden. Dabei kann der mit zweiter optischer Strahlung belichtete zweite Teilbereich zusätzlich zumindest teilweise mit erster optischer Strahlung belichtet werden. Die zeitliche Versetzung der Belichtung von erstem und zweitem Teilbereich ermöglicht es, den zweiten Teilbereich mit einer ausreichend hohen Intensität zu bestrahlen, die trotz Überlagerung von beispielsweise erster optischer Strahlung eine zuverlässige Bestimmung des Scheibenzustandes ermöglicht.

Eine Blende oder ähnliche Mittel, die den zweiten Teilbereich vor erster optischer Strahlung schützen und nur zweite optische Strahlung durchlassen, sind erfindungsgemäß nicht notwendig. Weiterhin ist es nicht notwendig, die zweite optische Strahlung so zu führen, dass diese im Wesentlichen nur auf den zweiten Teilbereich der Sensorfläche trifft.

Ein Teilbereich der Sensorfläche kann sowohl für die Erfassung der ersten optischen Strahlung als auch der zweiten optischen Strahlung verwendet werden, d.h., einzelne, die Sensorfläche bildende Sensoren, können mit sich überlagernder erster optischer Strahlung und zweiter optischer Strahlung belichtet werden. Da Blenden und eine genaue Strahlführung der zweiten optischen Strahlung nicht mehr notwendig sind, ist eine einfache konstruktive Gestaltung der Kameraanordnung möglich.

Der Bildsensor kann aus mehreren getrennten Einheiten, die die Sensorfläche bilden, zusammengesetzt sein. Bevorzugt ist allerdings, dass der Bildsensor eine einzelne Bildsensoreinheit ist.

Eine Belichtung des ersten Teilbereichs mit zweiter optischer Strahlung kann dadurch verhindert werden, dass im Zeitraum der Belichtung die Strahlungsquelle deaktiviert ist oder beispielsweise durch ein Umleiten oder Blockieren verhindert wird, dass zweite optische Strahlung auf den ersten Teilbereich trifft. Als Strahlungsquellen für die Erzeugung der zweiten optischen Strahlung kommt vorzugsweise eine LED oder ein Laser in Betracht. Die Kamera ist vorzugsweise auf Fernsicht eingestellt.

Erfindungsgemäß ist vorgesehen, dass periodisch, d.h. jedes n-te Mal, in einem Bildaufnahmezyklus zumindest ein Teilbereich der Sensorfläche mit der zweiten optischen Strahlung belichtet wird.

Dies ermöglicht es, zwischen zwei n-ten Bildaufnahmezyklen einen Teilbereich oder die gesamte Sensorfläche des Bildsensors mit der ersten optischen Strahlung zu belichten unter Abwesenheit der zweiten optischen Strahlung. Die in diesen Bildaufnahmezyklen erfassten Bilddaten können für die Aufnahme der Fahrzeugumgebung verwendet werden. Die n-ten Bildaufnahmezyklen erlauben es, die Bilddaten des mit zweiter optischer Strahlung belichteten Teilbereichs für die die Bestimmung des Scheibenzustandes zu verwenden. Eine Beeinflussung der Bildaufnahme der Fahrzeugumgebung durch zweite optische Strahlung kann auf diese Weise vermieden werden.

Somit ist es möglich, im n-ten Bildaufnahmezyklus den mit zweiter optischer Strahlung belichteten Teilbereich oder die gesamte Sensorfläche zusätzlich zumindest teilweise mit erster optischer Strahlung zu belichten. Beispielsweise kann durch das Vorsehen einer ausreichenden Intensität der zweiten optischen Strahlung gewährleistet werden, dass sich der zweiten optischen Strahlung überlagernde Strahlung, insbesondere erste optische Strahlung, eine Bestimmung des Scheibenzustandes nicht wesentlich beeinflusst.

Auch bei dieser Ausführungsform sind Blenden, die einen Teilbereich des Bildsensors vor erster optischer Strahlung schützen, sowie eine genaue Strahlführung von zweiter optischer Strahlung sind nicht notwendig. Insbesondere können Teilbereiche der Sensorfläche des Bildsensors sowohl für die Erfassung von erster optischer Strahlung für die Aufnahme einer Fahrzeugumgebung als auch für die Erfassung von zweiter optischer Strahlung für die Ermittlung des Scheibenzustandes verwendet werden.

Erfindungsgemäß ist es möglich, dass in einem Bildaufnahmezyklus des Bildsensors der erste Teilbereich und der zweite Teilbereich der Sensorfläche zeitlich gegeneinander versetzt belichtet werden, wobei der erste Teilbereich in Abwesenheit von zweiter optischer Strahlung mit erster optischer Strahlung belichtet wird und der zweite Teilbereich mit erster optischer Strahlung und zweiter optischer Strahlung belichtet wird. Hierbei können diese Teilbereiche von Bildaufnahmezyklus zu Bildaufnahmezyklus in Größe und Lage neu festgelegt werden, insbesondere wandern.

In beiden Varianten zur Bestimmung eines Scheibenzustandes wird verhindert, dass erste optische Strahlung, die für die Detektion der Fahrzeugumgebung erfasst wird, durch zweite optische Strahlung überlagert ist, die die Erfassung der Fahrzeugumgebung möglicherweise stören kann. Dies ermöglicht es, zweite optische Strahlung mit einer solchen Intensität zu erzeugen, die es erlaubt, trotz Überlagerung mit erster optischer Strahlung den Scheibenzustand zu bestimmen.

### Kurze Beschreibung der Zeichnungen

Die Erfindung wird im Folgenden anhand von Ausführungsbeispielen, die durch mehrere Figuren dargestellt sind, näher erläutert. Dabei zeigt:
Fig. 1 schematisch eine Fensterscheibe eines Fahrzeuges mit angedeuteten Teilen einer Ausführungsform einer erfindungsgemäßen Kameraanordnung,
Fig. 2 eine erste Schnittansicht durch die Kameraanordnung,
Fig. 3 eine zweite Schnittansicht durch die Kameraanordnung,
Fig. 4 drei Diagramme, die Belichtungsstart und Belichtungsende eines Bildsensors sowie Aktivieren und Deaktivieren einer Strahlungsquelle der Kameraanordnung in Abhängigkeit der Zeit darstellen,
Fig. 5 eine Aufsicht auf eine schematisch dargestellte Sensorfläche des Bildsensors,
Fig. 6 ein erstes Ablaufschema für die Ermittlung eines Scheibenzustandes,
Fig. 7 zwei Diagramme, die eine Belichtung des Bildsensors und ein Ein- und Ausschalten der Strahlungsquelle der Kameraanordnung in Abhängigkeit der Zeit darstellt, und
Fig. 8 ein zweites Ablaufschema für die Bestimmung eines Scheibenzustandes.

### Ausführungsformen der Erfindung

Gleiche oder einander entsprechende Bauteile sind in den Figuren mit denselben oder entsprechenden Bezugszeichen gekennzeichnet.

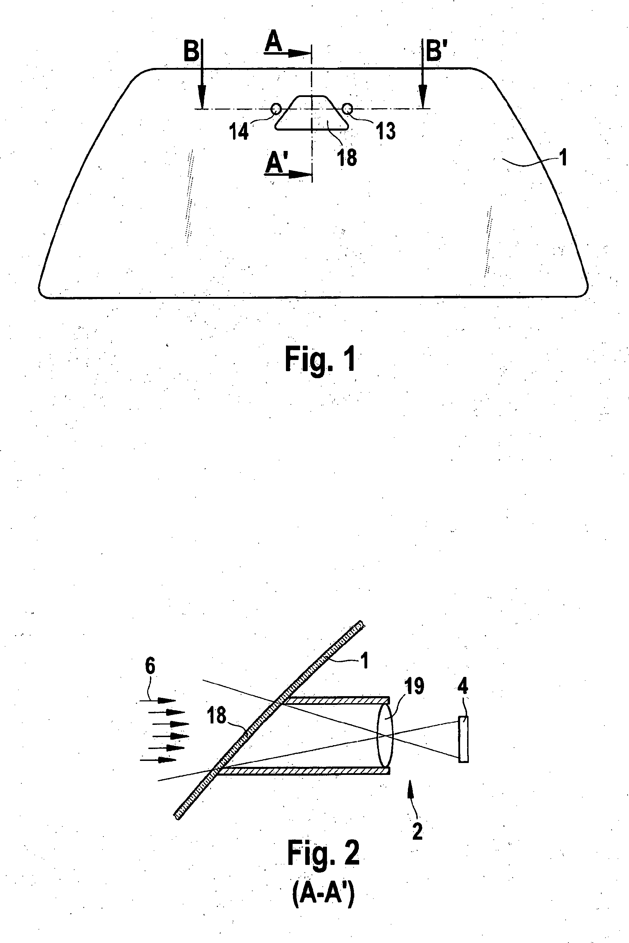

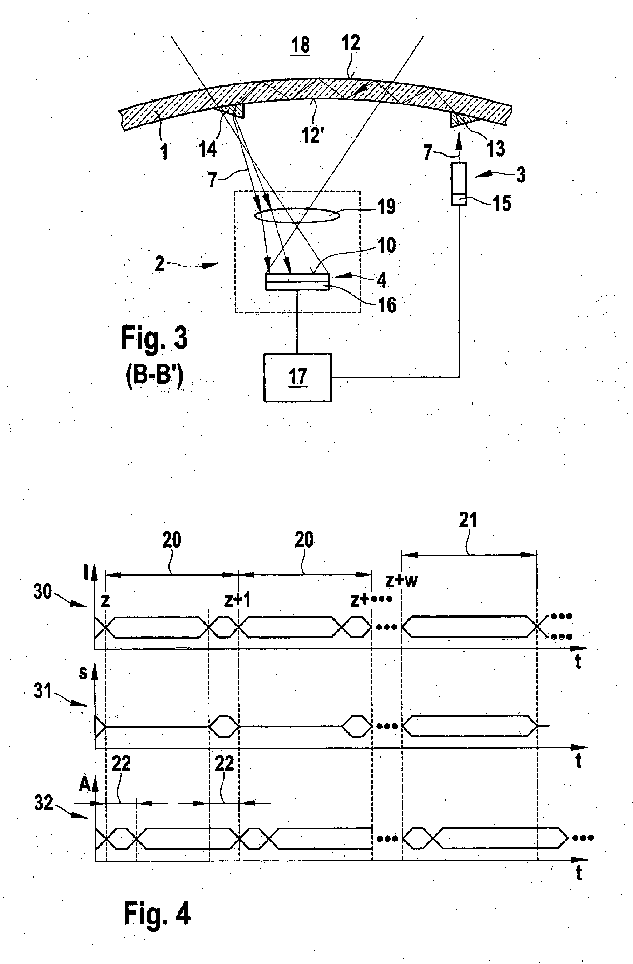

Die Fig. 1 bis 3 und Fig. 5 zeigen eine Ausführungsform einer erfindungsgemäßen Kameraanordnung für die Aufnahme einer Fahrzeugumgebung und die Bestimmung eines Scheibenzustandes einer Fahrzeugscheibe 1, hier einer Windschutzscheibe 1. Fig. 2 zeigt dabei den in Fig. 1 durch die Schnittlinie A-A' gekennzeichneten Schnitt, Fig. 3 den durch die Schnittlinie B-B' gekennzeichneten Schnitt.

Die Kameraanordnung umfasst eine Kamera 2 und eine Strahlungsquelle 3. Die Kamera 2 weist einen Bildsensor 4 zur Aufnahme von Bildern auf, mittels dem eine von der Fahrzeugumgebung erzeugte erste optische Strahlung 6 erfassbar ist. Durch die Strahlungsquelle 3 ist eine zweite optische Strahlung 7 erzeugbar, von der ein Teil ebenfalls durch den Bildsensor 4 erfassbar ist. Dieser durch den Bildsensor 4 erfasste Teil der zweiten optischen Strahlung 7 ist dabei abhängig von dem Scheibenzustand der Scheibe 1, insbesondere von einer Benetzung der Scheibe 1 durch Regentropfen. Der Bildsensor 4 weist eine Sensorfläche 10 auf, wobei mittels eines Teilbereiches der Sensorfläche 10 gemeinsam sowohl erste optische Strahlung 6 als auch zweite optische Strahlung 7 erfassbar sind. Die Kameraanordnung ist derart ausgebildet, dass unter Verwendung des mit dem Teilbereich oder der gesamten Sensorfläche 10 erfassten Teils der zweiten optischen Strahlung 7 der Scheibenzustand der Scheibe 1 bestimmbar ist.

Die Kamera 2 ist hier eine Videokamera. Der Bildsensor 4 ist ein Bildsensor auf Halbleiterbasis, hier ein CMOS-Bildsensor. Alternativ wäre beispielsweise auch ein CCD-Bildsensor verwendbar. Die Sensorfläche 10 des Bildsensors 4 weist eine Vielzahl von Bildpunkte/Pixel bildenden Sensoren 11 auf, die spalten- und zeilenweise in Form einer Matrix angeordnet sind. Die Strahlungsquelle 3 umfasst eine LED. Alternativ kann für die Strahlungsquelle 3 ein Laser verwendet werden. Zum Steuern der LED weist die Strahlungsquelle 3 eine erste Steuereinheit 15 auf. Der Bildsensor 4 umfasst zum Steuern eine zweite Steuereinheit 16. Des Weiteren umfasst die Kamera 2 eine Kameraoptik 19, hier dargestellt durch eine Linse 19.

Die Kamera 2 ist im Innenraum des Fahrzeuges hinter der Scheibe 1 auf Höhe eines Fahrzeugrückspiegels so angeordnet, dass erste optische Strahlung 6 durch die Scheibe 1 hindurch tretend auf den Bildsensor 4 treffen kann. Dieser Durchtrittsbereich 18 des Erfassungsbereiches der Kamera 2 ist hier trapezförmig, siehe Fig. 1.

Vor dem Erfassen durch den Bildsensor 4 kann zweite optische Strahlung 7 bereichsweise durch das Innere der Scheibe 1 geleitet werden. Über ein erstes Koppelmittel 13 wird von der Strahlungsquelle 3 erzeugte zweite optische Strahlung 7 derart unter einem Winkel in das Innere der Scheibe 1 eingekoppelt, dass die zweite optische Strahlung 7 an einer außen liegenden Oberfläche 12 und einer dem Fahrzeuginnenraum zugewanden Oberfläche 12' der Scheibe 1 im Falle eines Grenzüberganges Scheibe-Luft total reflektiert wird. Die derart eingekoppelte zweite optische Strahlung 7 durchläuft horizontal den Sichtkegel der Kamera 2. Über ein zweites Koppelmittel 14 wird ein Teil der zweiten optischen Strahlung, der mehrmals an den Oberflächen 12, 12' reflektiert wurde, aus der Scheibe 1 ausgekoppelt und in die Kamera 2 derart eingekoppelt, dass zweite optische Strahlung 7 vom Bildsensor 4 erfassbar ist.

Erstes Koppelmittel 13 und zweites Koppelmittel 14 werden jeweils durch ein Prisma gebildet, die an der innen liegenden Oberfläche 12' der Scheibe 1 angeordnet sind. Alternativ sind auch andere optische Elemente, insbesondere difraktive Elemente, für diese Funktion einsetzbar. Die horizontale Führung der zweiten optischen Strahlung 7 durch das Innere der Scheibe 1 bietet den Vorteil, dass die hierfür notwendigen Komponenten der Kameraanordnung insbesondere hinter einem Rückspiegel angeordnet werden können, was platzsparend ist und wodurch eine derartige Kameraanordnung wenig störend wirkt.

Eine Veränderung insbesondere an der äußeren Oberfläche 12 der Fahrzeugscheibe 1, beispielsweise durch eine Benetzung der Oberfläche 12 durch Wassertropfen, führt zu einer Reduktion der Totalreflexionen und zu einer Abnahme der Intensität des Teils der zweiten optischen Strahlung 7, der von dem Bildsensor 4 erfasst wird. Auch eine Streuung von zweiter optischer Strahlung an einer der Oberflächen 12, 12' der Scheibe 1, beispielsweise als Folge von Kratzern, führt zu einer Intensitätsabnahme und/oder Änderung einer Intensitätsverteilung zweiter optischer Strahlung 7 am Ort des Bildsensors 4.

Des Weiteren umfasst die Kameraanordnung 7 eine Auswerteeinheit 17. Die Auswerteeinheit 17 ist mit der ersten Steuereinheit 15 der Strahlungsquelle 3 und der zweiten Steuereinheit 16 des Bildsensors 4 mittels Datenübertragungsleitungen verbunden. Die Auswerteeinheit 17 ist für das Auswerten von mit dem Bildsensor 4 erfassten Bilddaten zuständig, hier für die Ermittlung einer Fahrzeugumgebung und die Bestimmung eines Scheibenzustandes der Scheibe 1. Die Verbindung mit der Strahlungsquelle 3 und dem Bildsensor 4 ermöglicht der Auswerteeinheit 17, Strahlungsquelle 3 und Bildsensor 4 zu geeigneten Zeitpunkten anzusteuern, insbesondere die LED zu aktivieren und zu deaktivieren, wie später noch genauer beschrieben wird. Die Auswerteeinheit 17 kann mit weiteren Komponenten, beispielsweise Komponenten eines Fahrzeugassistenzsystems, verbunden sein.

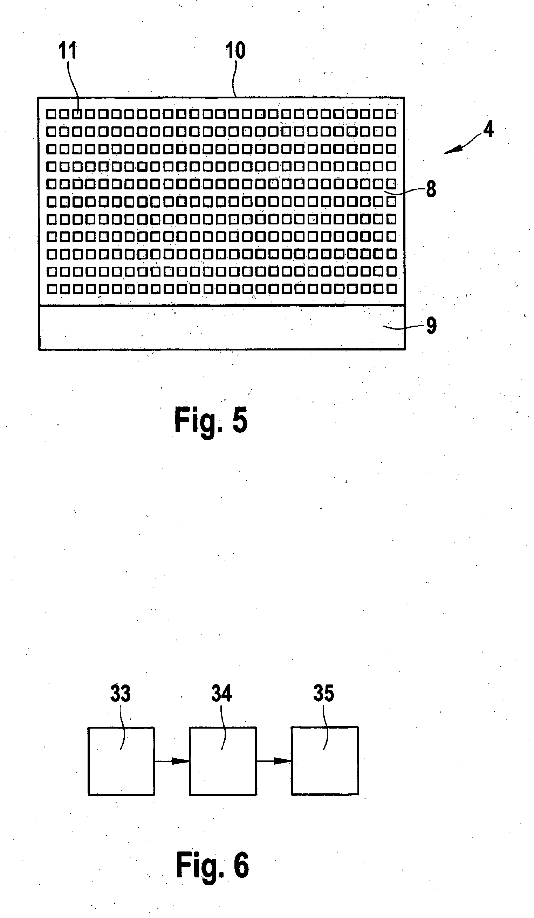

Gemäß einer Ausführungsform eines ersten erfindungsgemäßen Verfahrens für die Aufnahme einer Fahrzeugumgebung und die Erfassung eines Scheibenzustandes einer Fahrzeugscheibe 1, siehe Fig. 4 und 5, wird in einem Bildaufnahmezyklus 20 des Bildsensors 4 ein erster Teilbereich 8 und ein zweiter Teilbereich 9 der Sensorfläche 10 des Bildsensors 4 zeitlich gegeneinander versetzt belichtet, wobei der erste Teilbereich 8 in Abwesenheit von zweiter optischer Strahlung 7 und der zweite Teilbereich 9 mit zweiter optischer Strahlung 7 belichtet wird. Eine zeitliche Versetzung der Belichtung von erstem Teilbereich 8 und zweiten Teilbereich 9 wird dadurch erreicht, dass die Belichtung des x-ten Bildpunkts 11 dann erfolgt, wenn die Belichtung (x-y)-ten Bildpunkts abgeschlossen ist.

In diesem Ausführungsbeispiel durchläuft ein erster Adresszeiger zeilenweise von der ersten Zeile der Sensorfläche 10 bis zur letzten Zeile der Sensorfläche 10 alle Sensoren bzw. Bildpunkte 11. Erreicht der erste Adresszeiger einen Bildpunkt, so wird die Belichtung dieses Bildpunktes 11 gestartet. Ein zweiter Adresszeiger läuft dem ersten Adresszeiger in einem Abstand y hinterher. Wird ein Sensor 11 durch den zweiten Adresszeiger adressiert, so wird die ursprünglich durch den vorlaufenden ersten Adresszeiger gestartete Belichtung abgebrochen. Insbesondere kann über die Geschwindigkeit, mit der die Adresszeiger die Sensorfläche 10 durchlaufen und den Abstand y die Belichtungszeit der einzelnen Sensoren 11 bestimmt werden. Man bezeichnet dieses Prinzip auch als "Rolling Shutter"-Prinzip.

Die Fig. 4 zeigt drei Diagramme, wobei das erste Diagramm 30 den Beginn der Belichtung I der einzelnen Bildpunkte 11 der Sensorfläche 10 in Abhängigkeit der Zeit, das zweite Diagramm 31 den Zustand der Strahlungsquelle in Abhängigkeit der Zeit und das dritte Diagramm 32 den Abschluss der Belichtung der einzelnen Bildpunkte 11 der Sensorfläche 10 in Abhängigkeit der Zeit darstellt.

Zur Aufnahme eines z-ten Bildes wird im Rahmen eines Bildaufnahmezyklus 20 die Belichtung der Sensorfläche 10 gestartet. Die Belichtung der Sensorfläche 10 erfolgt dabei nach dem "Rolling Shutter"-Prinzip, wie oben bereits beschrieben. Nachdem der erste Adresszeiger, der die Belichtung der einzelnen Sensoren 11 startet, 95% der Sensorfläche 10, vorzugsweise 97,5% der Sensorfläche 10, bei deaktivierter Strahlungsquelle 3 durchlaufen hat, wird für das Durchlaufen des restlichen Teiles der Sensorfläche 10 die Strahlungsquelle 3 aktiviert, so das zweite optische Strahlung 7 auf die Sensorfläche 10 trifft. Hat der erste Adresszeiger die gesamte Sensorfläche 10 durchlaufen, was auch den Ende eines Bildzyklus 20 bezeichnet, so wird die Strahlungsquelle 3 ausgeschaltet. Der zweite Adresszeiger läuft dem ersten Adresszeiger in einem Abstand, der der Belichtungszeit 22 entspricht, hinterher, siehe drittes Diagramm 32. Die Belichtungszeit 22, mit der jeder einzelne Sensor 11 belichtet wird, entspricht hier der Zeitdauer, in der die Strahlungsquelle 3 aktiviert wird.

Nach einer Abfolge von w Bildaufnahmezyklen 20, hier w=25, schließt sich ein Kalibrierzyklus 21 an. Der Kalibrierzyklus 21 unterscheidet sich von einem Bildaufnahmezyklus 20 dadurch, dass die Strahlungsquelle 3 über die gesamte Zeitdauer, die der erste Adresszeiger benötigt, um die gesamte Sensorfläche 10 zu durchlaufen, aktiviert ist.

Über die gesamte Zeit trifft erste optische Strahlung 6, die von einer Fahrzeugumgebung erzeugt wird, auf die gesamte Sensorfläche 10. In den Zeitabschnitten, in denen die Strahlungsquelle 3 aktiviert wird, trifft zusätzlich zweite optische Strahlung 7 auf die Sensorfläche 10. Durch die zeitliche Versetzung der Belichtung der einzelnen Sensoren 11 der Sensorfläche 10 wird bewirkt, dass die gesamte Sensorfläche 10 mit erster optischer Strahlung 6 belichtet ist, aber nur ein Teilbereich 9 der Sensorfläche 10, der höchstens 10%, vorzugsweise höchstens 5% der gesamten Sensorfläche 10 des Bildsensors 4 entspricht, mit zweiter optischer Strahlung 7 belichtet ist. Der Bereich der Sensorfläche 10, der mit erster optischer Strahlung 6 in Abwesenheit von zweiter optischer Strahlung 7 belichtet ist, bildet den ersten Teilbereich 8, der andere Teilbereich der Sensorfläche 10, der mit erster optischer Strahlung und zweiter optischer Strahlung belichtet ist, bildet den zweiten Teilbereich 9.

Nach jedem Bildaufnahmezyklus 20 oder Kalibrierzyklus 21 werden die von der Sensorfläche 10 erfassten Bilddaten in einem Schritt 33, siehe Fig. 6, von der Auswerteeinheit 17 ausgelesen. Für die Bestimmung des Scheibenzustandes werden die Bilddaten des zweiten Teilbereiches 9 in einem zweiten Schritt 34 mit einer Maske maskiert. Die Maske hat die Funktion, den Einfluss von Störstellen, wie Kratzer, die die Bestimmung des Scheibenzustandes verschlechtern können, zu reduzieren. Neben einer vollständigen Maskierung bestimmter Bilddaten aus dem zweiten Teilbereich 9 ist auch eine teilweise Unterdrückung solcher Daten möglich. In einem dritten Schritt 35 werden die durch die Maskierung aufbereiteten Bilddaten mit Referenzwerten verglichen. Die Referenzwerte können beispielsweise den Zustand einer unbenetzten Scheibe 1 repräsentieren. Eine Differenz von gemessenen Bilddaten und Referenzwerten erlaubt die Bestimmung des Scheibenzustandes. Die Referenzwerte können vorgegebene Werte sein, oder durch zuvor aufgenommene Bilddaten gebildet worden sein. Beispielsweise können bei einer Benetzung der Scheibe 1 durch Regentropfen die Referenzwerte durch die Bilddaten gebildet werden, die kurz nach einem Wischerdurchgang mit dem Bildsensor 4 in Bildaufnahmezyklen 20 aufgenommen worden sind. Ein Vergleich dieser Referenzwerte mit Bilddaten, die kurz vor einem Wischerdurchgang aufgenommen werden, ermöglicht es, die Benetzung der Scheibe 1 mit Regentropfen zu bestimmen. Eine Mittelwertbildung von solchen Referenzwerten über einen längeren Zeitraum erlaubt die Bestimmung von dauerhaften Änderungen des Scheibenzustandes, wie sie beispielsweise durch Kratzer, Schmutz, Eis oder Reif hervorgerufen werden können. Derartige Referenzwerte können auch die Grundlage einer Maske für die Maskierung von Bilddaten, wie oben beschrieben, bilden.

Die optische Strahlung wird mit einer ausreichenden Intensität erzeugt, so dass erste optische Strahlung, die ebenfalls von dem zweiten Teilbereich 9 erfasst wird, bei der Auswertung des Scheibenzustandes nicht ins Gewicht fällt.

Entsprechend können die im Kalibrierzyklus 21 gewonnenen Bilddaten, in dem die gesamten Sensorfläche 10 mit zweiter optischer Strahlung belichtet wird, dem Scheibenzustand zu bestimmen.

Der erste Teilbereich 8 und/oder der zweite Teilbereich 9 kann in seiner Lage und/oder seiner Größe verändert werden. Beispielsweise ist es möglich, den zweiten Teilbereich 9 über die Sensorfläche 10 "wandern" zu lassen. Der erste Teilbereich 8 ändert sich entsprechend. Dieses Wandern kann dadurch erreicht werden, dass die Strahlungsquelle 3 von Bildaufnahmezyklus 20 zu Bildaufnahmezyklus 20 mit unterschiedlichen zeitlichen Versetzungen aktiviert wird. Auf diese Weise kann insbesondere die gesamte Sensorfläche 10, wenn auch zeitlich versetzt, für das Erfassen zweiter optischer Strahlung 7 verwendet werden, obwohl der zweite Teilbereich 9 nur ein Bruchteil der Gesamtfläche der Sensorfläche 10 ist. Durch eine Veränderung der Zeitdauer, in der die Strahlungsquelle 3 in einem Bildaufnahmezyklus 20 aktiviert ist, lässt sich die Größe des zweiten Teilbereichs 9 der Sensorfläche 10 der mit zweiter optischer Strahlung 7 belichtet wird, von Bildaufnahmezyklus zu Bildaufnahmezyklus 20 verändern.

In einer erfindungsgemäßen Ausführungsform des Verfahrens wird nicht in jedem Bildaufnahmezyklus 20, sondern periodisch in jedem n-ten Bildaufnahmezyklus ein zweiter Teilbereich 9 mit zweiter optischer Strahlung belichtet. N ist vorzugsweise ≥ 10 und liegt besonders bevorzugt im Bereich von 30 bis 50.

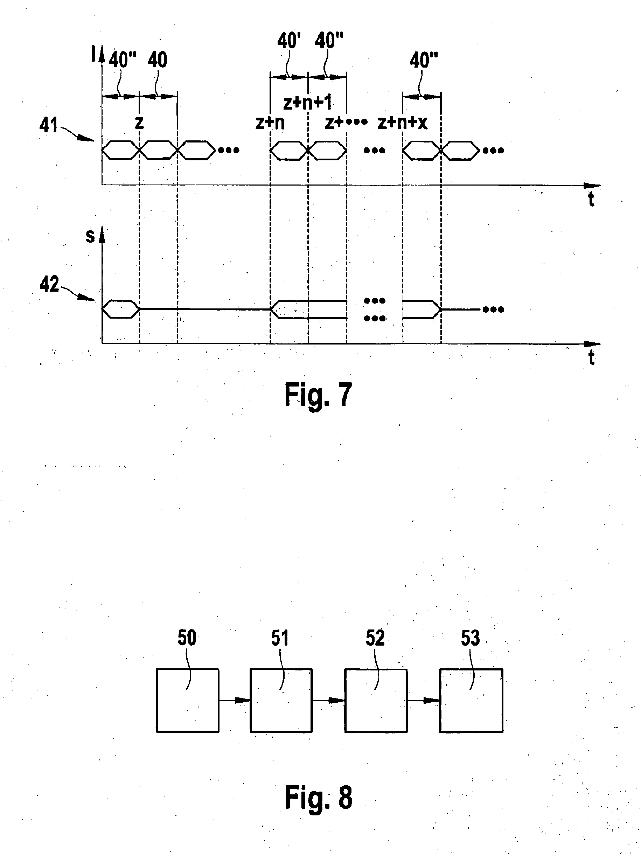

Gemäß des erfindungsgemäßen Verfahrens für die Aufnahme einer Fahrzeugumgebung und die Bestimmung eines Scheibenzustandes einer Fahrzeugscheibe 1, siehe Fig. 7 und 8, wird in einem Bildaufnahmezyklus des Bildsensors 4 die Sensorfläche 10 des Bildssensors 4 belichtet, wobei periodisch in jedem n-ten Bildaufnahmezyklus 40' ein Teilbereich der Sensorfläche 10 mit zweiter optischer Strahlung 7 belichtet wird.

Die Fig. 7 zeigt ein erstes Diagramm 41, das die Belichtung I der Sensorfläche 10 in Abhängigkeit der Zeit darstellt, und ein zweites Diagramm 42, das den Zustand s der Strahlungsquelle 3, hier deaktiviert und aktiviert, in Abhängigkeit der Zeit darstellt. Ein Bildzyklus ist dann abgeschlossen, wenn die gesamte Sensorfläche 10 belichtet wurde, wie im ersten Diagramm 41 zu sehen ist. In jedem n-ten Bildaufnahmezyklus 40', hier n=40, wird die Strahlungsquelle 3 über den gesamten Zeitraum der Belichtung der Sensorfläche 10 aktiviert, so dass die Sensorfläche 10 mit zweiter optischer Strahlung belichtet wird. Es folgen × weitere Bildaufnahmezyklen 40", wobei x ≥ 1 gilt, vorzugsweise x im Bereich von 2 bis 7 liegt, in denen die Strahlungsquelle 3 aktiviert bleibt. Anschließend wird die Strahlungsquelle 3 aktiviert und es folgenden n-x-1 Bildaufnahmezyklen 40, in denen keine zweite optische Strahlung 7 auf die Sensorfläche 10 trifft. Neben zweiter optischer Strahlung 7 trifft durchgängig erste optische Strahlung 6, die von einer Fahrzeugumgebung erzeugt wird, auf die gesamt Sensorfläche 10, wodurch die Sensorfläche 10 in jedem der Bildaufnahmezyklen 40, 40', 40" gegebenenfalls zusätzlich zur zweiten optischen Strahlung 7 mit erster optischer Strahlung 6 belichtet wird.

Die Auswerteeinheit 17 liest die von der Sensorfläche 10 in einem Bildaufnahmezyklus 40, 40' und 40" erfassten Bilddaten aus. Die Bilddaten der Bildaufnahmezyklen 40', 40", in denen die Sensorfläche 10 mit zweiter optischer Strahlung 7 belichtet wurden, werden für die Bestimmung des Scheibenzustandes der Scheibe 1 verwendet. Die Bilddaten der Bildaufnahmezyklen 40, die in Abwesenheit von zweiter optischer Strahlung 7 belichtet wurden, geben eine Fahrzeugumgebung ohne störende Überlagerung durch zweite optische Strahlung 7 wieder. Auch diese Bilddaten können in der Auswerteeinheit 17 weiter verarbeitet werden oder an andere Komponenten im Rahmen von Fahrerassistenzfunktionen weitergegeben werden.

Für die Bestimmung des Scheibenzustandes werden in einem ersten Schritt 50, siehe Fig. 8, die Bilddaten der Sensorfläche 10, die im Rahmen der Bildaufnahmezyklen 40', 40" unter Belichtung mit zweiter optischer Strahlung aufgenommen wurden, von der Auswerteeinheit 17 ausgelesen. In einem zweiten Schritt 51 werden diese Bilddaten mit einer Maske maskiert. Diese Maskierung hat den Zweck, für die Auswertung ungeeignete Bilddaten, wie sie z.B. durch Kratzer, Schmutz oder sonstige Störstellen in der Scheibe 1 entstehen können, zu maskieren. Optional kann eine solche Maskierung auch entfallen. In einem dritten Schritt 52 wird aus den Bilddaten des n-ten Bildaufnahmezyklus 40' und der x nachfolgenden Bildaufnahmezyklen 40", in denen die Strahlungsquelle 3 durchgehend aktiviert ist, ein Mittelwert gebildet. Zweck dieser Mittelwertbildung ist insbesondere eine Rauschunterdrückung. In einem vierten Schritt 53 werden die so maskierten und gemittelten Bilddaten mit Referenzwerten verglichen. Eine Abweichung von den Referenzwerten signalisiert eine Änderung des Scheibenzustandes. Die Referenzwerte können durch zuvor festgelegte Werte gebildet werden, oder aber durch zuvor mit dem Bildsensor 4 aufgenommene Bilddaten gebildet sein. Beispielsweise können bei einer Benetzung der Scheibe 1 durch Regentropfen die Referenzwerte durch die Bilddaten gebildet werden, die kurz nach einem Wischerdurchgang mit dem Bildsensor 4 in Bildaufnahmezyklen 40', 40" aufgenommen worden sind. Ein Vergleich dieser Referenzwerte mit Bilddaten, die kurz vor einem Wischerdurchgang aufgenommen werden, ermöglicht es, die Benetzung der Scheibe 1 mit Regentropfen zu bestimmen. Eine Mittelwertbildung von solchen Referenzwerten über einen längeren Zeitraum erlaubt die Bestimmung von dauerhaften Änderungen des Scheibenzustandes, wie sie beispielsweise durch Kratzer, Schmutz, Eis oder Reif hervorgerufen werden können. Derartige Referenzwerte können auch die Grundlage einer Maske für die Maskierung von Bilddaten, wie oben beschrieben, bilden.

Die Bilddaten, die im Rahmen der Bildaufnahmezyklen 40', 40" gewonnen worden, geben neben der Belichtung durch zweite optische Strahlung auch die Belichtung durch erste optische Strahlung 6 wieder. Um die erste Strahlung 6 für die Bestimmung des Scheibenzustandes zu unterdrücken, ist die Intensität der zweiten optischen Strahlung 7 geeignet hoch eingestellt. Für das Erfassen der Fahrzeugumgebung ist dies unproblematisch, da die Erfassung der Fahrzeugumgebung in Bildaufnahmezyklen 40 erfolgt, in denen die Strahlungsquelle 3 nicht aktiviert ist, also der Bildsensor 4 nicht mit zweiter optischer Strahlung 7 belichtet wird.

## Patentansprüche

1. Kameraanordnung zur Erfassung einer Fahrzeugumgebung durch eine Fahrzeugscheibe (1), aufweisend:
eine Kamera (2) mit einem Bildsensor (4) zum Aufnehmen von Bildern, wobei durch eine Sensorfläche (10) des Bildsensors (4) eine von der Fahrzeugumgebung erzeugte erste optische Strahlung (6) erfassbar ist,
eine Strahlungsquelle (3) zum Ausgeben einer zweiten optischen Strahlung (7) in die Fahrzeugscheibe (1),
eine erste Steuereinheit (15) zum Steuern der Strahlungsquelle (3), eine zweite Steuereinheit (16) zum Steuern des Bildsensors (4) und Auslesen des Bildsensors (4) in Bildaufnahmezyklen (20), und
eine Auswerteeinheit (17) zum Auswerten von mit dem Bildsensor (4) aufgenommen Bilddaten und Bestimmung eines Scheibenzustandes,
wobei zumindest ein Teil der ausgegebenen zweiten optischen Strahlung (7) durch die Sensorfläche (10) des Bildsensors (4) erfassbar ist und der durch die Sensorfläche (10) erfasste Teil der zweiten optischen Strahlung (7) abhängig von einem Scheibenzustand der Fahrzeugscheibe (1) ist, wobei die Kameraanordnung derart eingerichtet ist und ein erster Teilbereich (8,9) und ein zweiter Teilbereich (8,9) der Sensorfläche (10) derart ausgebildet sind, dass in mindestens einem Bildaufnahmezyklus (20; 40, 40', 40") der erste Teilbereich (8, 9) der Sensorfläche (10) mit der ersten optischen Strahlung (6) in Abwesenheit der zweiten optischen Strahlung (7) und zeitlich dazu versetzt der zweite Teilbereich (8, 9) der Sensorfläche (10) mit der ersten optischen Strahlung (6) und der zweiten optischen Strahlung (7) belichtet wird, und
wobei mittels des zweiten Teilbereiches (9) der Sensorfläche (10) gemeinsam sowohl die erste optische Strahlung (6) als auch die zweite optische Strahlung (7) erfassbar sind, und
die erste Steuereinheit (15) derartig ausgebildet ist, dass sie nur periodisch in einem Teil der Bildaufnahmezyklen (40') die zweite optische Strahlung (7) einkoppelt.

2. Kameraanordnung nach Anspruch 1, **dadurch gekennzeichnet, dass** der durch die Sensorfläche (10) erfasste Teil der zweiten optischen Strahlung (7) abhängig ist von einer Benetzung der Fahrzeugscheibe (1) durch eine Flüssigkeit und/oder Kratzern und/oder Vertiefungen in der Fahrzeugscheibe (1).

3. Kameraanordnung nach einem der vorhergehenden Ansprüche, **dadurch gekennzeichnet, dass** der zweite Teilbereich (9) höchstens 10%, vorzugsweise höchstens 5% der gesamten Sensorfläche (10) des Bildsensors (4) entspricht.

4. Kameraanordnung nach einem der vorherigen Ansprüche, **dadurch gekennzeichnet, dass** die zweite optische Strahlung (7) zumindest vor dem Erfassen durch den Bildsensor (4) bereichsweise durch das Innere der Fahrzeugscheibe (1) geleitet ist und an einer Oberfläche (12) der Fahrzeugscheibe (1) zumindest einmal reflektiert ist.

5. Kameraanordnung nach einem der vorherigen Ansprüche, **dadurch gekennzeichnet, dass** sie ein erstes Koppelmittel (14) und ein zweites Koppelmittel (13), z.B. optische Elemente, aufweist,
wobei mittels dem des ersten Koppelmittels (14) der von dem Scheibenzustand abhängige Teil der zweiten optischen Strahlung (7) aus der Fahrzeugscheibe (1) auskoppelbar und in die Kamera (2) einkoppelbar ist, und mittels des zweiten Koppelmittels (13) die von der Strahlungsquelle (3) erzeugte zweite optische Strahlung (7) in die Scheibe (1) einkoppelbar ist.

6. Verfahren zur Erfassung einer Fahrzeugumgebung, bei dem mittels eines Bildsensors (4) eine von der Fahrzeugumgebung erzeugte erste optische Strahlung (6) erfasst wird,
mittels einer Strahlungsquelle (3) eine zweite optische Strahlung (7) erzeugt und in die Fahrzeugscheibe (1) eingekoppelt wird, wobei eine Sensorfläche (10) des Bildsensors (4) einen ersten Teilbereich (8) und einen zweiten Teilbereich (9) aufweist, die zeitlich gegeneinander versetzt belichtet oder ausgelesen werden, wobei der erste Teilbereich (8) in Abwesenheit von der zweiten optischen Strahlung (7) belichtet wird, und der zweite Teilbereich (9) mit der zweiten optischen Strahlung (7) und zumindest teilweise mit der ersten optischen Strahlung (6) belichtet wird, wobei durch den Bildsensor (4) ein Teil der zweiten optischen Strahlung (7) erfasst wird, der abhängig von dem Scheibenzustand ist,
wobei in mindestens einem Bildaufnahmezyklus (20) des Bildsensors (4) der zweite Teilbereich (9) der Sensorfläche (10) des Bildsensors (4) mit der ersten optischen Strahlung (6) und der zweiten optischen Strahlung (7) belichtet wird, und
wobei unter Verwendung der mit dem zweiten Teilbereich (9) erfassten ersten und zweiten optischen Strahlung (7) der Scheibenzustand bestimmt wird, und
periodisch nur in einem Teil der Bildaufnahmezyklen (40') die zweite optische Strahlung (7) eingekoppelt wird.

7. Verfahren nach Anspruch 6, **dadurch gekennzeichnet, dass** in einem einem Bildaufnahmezyklus (20) zeitlich nachfolgendem Kalibrierzyklus (21) der erste Teilbereich (8) und der zweite Teilbereich (9) mit der zweiten optischen Strahlung (7) belichtet werden.

8. Verfahren nach einem der Ansprüche 6 bis 7, **dadurch gekennzeichnet, dass** für die Bestimmung des Scheibenzustandes die Bilddaten des ersten Teilbereiches (8) und des zweiten Teilbereiches (9) mit Referenzwerten verglichen werden, wobei auf Grundlage des Vergleichs der Bilddaten mit den Referenzwerten für Bilddaten des zweiten Teilbereiches (9) eine Maske erstellt wird, und Bilddaten des zweiten Teilbereichs (9) vor der Bestimmung des Scheibenzustandes mit der Maske maskiert werden.

9. Verfahren nach einem der Ansprüche 6 bis 8, **dadurch gekennzeichnet, dass** für einen nachfolgenden weiteren Biidaufnahmezyklus (20) der erste Teilbereich (8) und/oder der zweite Teilbereich (9) in seiner Lage und/oder seiner Größe verändert wird.

10. Verfahren nach einem der Ansprüche 6 bis 9, **dadurch gekennzeichnet, dass** in jedem n-ten Bildaufnahmezyklus (40') mit n größer als 10, besonders bevorzugt n im Bereich von 30 bis 50, zweite optische Strahlung eingekoppelt wird.

## Claims

1. Camera arrangement for acquiring the surroundings of a vehicle through a vehicle window (1), having:
a camera (2) with an image sensor (4) for taking images, it being possible to acquire a first optical radiation (6), produced by the vehicle surroundings, through a sensor surface (10) of the image sensor (4),
a radiation source (3) for emitting a second optical radiation (7) into the vehicle window (1),
a first control unit (15) for controlling the radiation source (3), a second control unit (16) for controlling the image sensor (4) and reading out the image sensor (4) in imaging cycles (20), and
an evaluation unit (17) for evaluating image data taken by the image sensor (4) and determining a window condition,
it being possible to acquire at least a portion of the emitted second optical radiation (7) through the sensor surface (10) of the image sensor (4) and the portion, acquired through the sensor surface (10), of the second optical radiation (7) being dependent on a window condition of the vehicle window (1), the camera arrangement being set up in such a way that a first subarea (8, 9) and a second subarea (8, 9) of the sensor surface (10) are formed in such a way that in at least one imaging cycle (20; 40, 40', 40'') the first subarea (8, 9) of the sensor surface (10) is exposed to the first optical radiation (6) in the absence of the second optical radiation (7) and, in a temporally offset fashion thereto, the second subarea (8, 9) of the sensor surface (10) is exposed to the first optical radiation (6) and the second optical radiation (7),
and
it being possible for in common both the first optical radiation (6) and the second optical radiation (7) to be acquired by means of the second subarea (9) of the sensor surface (10), and the first control unit (15) being designed in such a way that it couples in the second optical radiation (7) only periodically in some of the imaging cycles (40').

2. Camera arrangement according to Claim 1, **characterized in that** the portion, acquired through the sensor surface (10), of the second optical radiation (7) is dependent on wetting of the vehicle window (1) by a liquid, and/or on scratches and/or depressions in the vehicle window (1).

3. Camera arrangement according to one of the preceding claims, **characterized in that** the second subarea (9) corresponds to at most 10%, preferably at most 5% of the total sensor surface (10) of the image sensor (4).

4. Camera arrangement according to one of the preceding claims, **characterized in that**, at least before acquisition by the image sensor (4), the second optical radiation (7) is conducted in some areas through the interior of the vehicle window (1), and is reflected at least once at a surface (12) of the vehicle window (1).

5. Camera arrangement according to one of the preceding claims, **characterized in that** it has a first coupling means (14) and a second coupling means (13), for example optical elements,
it being possible for the portion of the second optical radiation (7) dependent on the window condition to be coupled out of the vehicle window (1) and coupled into the camera (2) with the aid of the first coupling means (14), and for the second optical radiation (7) produced by the radiation source (3) to be coupled into the window (1) with the aid of the second coupling means (13).

6. Method for acquiring the surroundings of a vehicle, in which
a first optical radiation (6) produced by the vehicle surroundings is acquired by means of an image sensor (4),
a second optical radiation (7) is produced by means of a radiation source (3) and coupled into the vehicle window (1), a sensor surface (10) of the image sensor (4) having a first subarea (8) and a second subarea (9) which are exposed or read out in a fashion temporally offset from one another,
the first subarea (8) being exposed in the absence of the second optical radiation (7), and
the second subarea (9) being exposed to the second optical radiation (7) and at least partially to the first optical radiation (6),
a portion of the second optical radiation (7) which is dependent on the window condition being acquired by the image sensor (4),
in at least one imaging cycle (20) of the image sensor (4) the second subarea (9) of the sensor surface (10) of the image sensor (4) being exposed to the first optical radiation (6) and the second optical radiation (7), and
the window condition being determined by using the first and second optical radiation (7) acquired with the second subarea (9), and
the second optical radiation (7) being coupled in periodically only in some of the imaging cycles (40').

7. Method according to Claim 6, **characterized in that** the first subarea (8) and the second subarea (9) are exposed to the second optical radiation (7) in a calibration cycle (21) temporally subsequent to an imaging cycle (20).

8. Method according to one of Claims 6 to 7, **characterized in that** in order to determine the window condition the image data of the first subarea (8) and of the second subarea (9) are compared with reference values, a mask being created on the basis of the comparison of the image data with the reference values for image data of the second subarea (9), and image data of the second subarea (9) being masked by the mask before the determination of the window condition.

9. Method according to one of Claims 6 to 8, **characterized in that** the position and/or the size of the first subarea (8) and/or of the second subarea (9) are/is varied for a subsequent further imaging cycle (20).

10. Method according to one of Claims 6 to 9, **characterized in that** a second optical radiation is coupled in in each nth imaging cycle (40') with n greater than 10, with particular preference with n in the range from 30 to 50.

## Revendications

1. Dispositif de caméra destiné à acquérir un environnement de véhicule à travers une vitre de véhicule (1), comprenant :
une caméra (2) comportant un capteur d'image (4) destiné à acquérir des images, dans lequel un premier rayonnement optique (6) généré par l'environnement du véhicule peut être détecté par une surface de détection (10) du capteur d'image (4),
une source de rayonnement (3) destinée à délivrer un second rayonnement optique (7) dans la vitre de véhicule (1),
une première unité de commande (15) destinée à commander la source de rayonnement (3), une seconde unité de commande (16) destinée à commander le capteur d'image (4) et la lecture du capteur d'image (4) au cours de cycles d'acquisition d'image (20), et
une unité d'évaluation (17) destinée à évaluer des données d'image acquises par le capteur d'image (4) et à déterminer un état de la vitre, dans lequel au moins une partie du second rayonnement optique (7) délivré peut être détectée par la surface de détection (10) du capteur d'image (4) et la partie du second rayonnement optique (7) détectée par la surface de détection (10) dépend d'un état de vitre de la vitre de véhicule (1), dans lequel le dispositif de caméra est conçu de manière à ce que et une première portion (8, 9) et une seconde portion (8, 9) de la surface de détection (10) sont formées de manière à ce que, lors d'au moins un cycle d'acquisition d'image (20 ; 40, 40', 40"), la première portion (8, 9) de la surface de détection (10) soit éclairée par le premier rayonnement optique (6) en l'absence du second rayonnement optique (7) et, de manière décalée dans le temps par rapport à cela, à ce que la seconde portion (8, 9) de la surface de détection (10) soit éclairée par le premier rayonnement optique (6) et par le second rayonnement optique (7), et dans lequel le premier rayonnement optique (6) ainsi que le second rayonnement optique (7) peuvent être détectés en commun au moyen de la seconde portion (9) de la surface de détection (10), et
la première unité de commande (15) est réalisée de manière à ce qu'elle ne couple en entrée le second rayonnement optique (7) que périodiquement au cours d'une partie des cycles d'acquisition d'image (40').

2. Dispositif de caméra selon la revendication 1, **caractérisé en ce que** la partie du second rayonnement optique (7) détectée par la surface de détection (10) dépend du fait que la vitre de véhicule (1) est mouillée par un liquide et/ou de rayures et/ou d'évidements dans la vitre de véhicule (1).

3. Dispositif de caméra selon l'une quelconque des revendications précédentes, **caractérisé en ce que** la seconde portion (9) correspond au plus à 10 %, et de préférence au plus à 5 % de la totalité de la surface de détection (10) du capteur d'image (4).

4. Dispositif de caméra selon l'une quelconque des revendications précédentes, **caractérisé en ce qu'**au moins avant la détection par le capteur d'image (4), le second rayonnement optique (7) est guidé dans certaines zones à travers l'intérieur de la vitre de véhicule (1) et est réfléchi au moins une fois sur une surface (12) de la vitre de véhicule (1).

5. Dispositif de caméra selon l'une quelconque des revendications précédentes, **caractérisé en ce qu'**il comprend un premier moyen de couplage (14) et un second moyen de couplage (13), par exemple des éléments optiques, dans lequel, au moyen de celui du premier moyen de couplage (14), la partie du second rayonnement optique (7) qui dépend de l'état de la vitre peut être couplée en en sortie de la vitre de véhicule (1) et être couplée en entrée de la caméra (2), et au moyen du second moyen de couplage (13), le second rayonnement optique (7) généré par la source de rayonnement (3) peut être couplé en entrée de la vitre (1).

6. Procédé de détection d'un environnement de véhicule, dans lequel un premier rayonnement optique (6) généré par l'environnement du véhicule est détecté au moyen d'un capteur d'image (4),
un second rayonnement optique (7) est généré au moyen d'une source de rayonnement (3) et est couplé en entrée de la vitre de véhicule (1), dans lequel une surface de détection (10) du capteur d'image (4) comprend une première portion (8) et une seconde portion (9) qui sont éclairées ou lues de manière décalée dans le temps l'une par rapport à l'autre,
dans lequel la première portion (8) est éclairée en l'absence du second rayonnement optique (7), et
la seconde portion (9) est éclairée par le second rayonnement optique (7) et au moins partiellement par le premier rayonnement optique (6),
dans lequel une partie du second rayonnement optique (7) qui dépend de l'état de la vitre est détectée par le capteur d'image (4),
dans lequel, lors d'au moins un cycle d'acquisition d'image (20) du capteur d'image (4), la seconde portion (9) de la surface de détection (10) du capteur d'image (4) est éclairée par le premier rayonnement optique (6) et par le second rayonnement optique (7), et
dans lequel l'état de la vitre est déterminé en utilisant les premier et second rayonnements optiques (7) détectés par la seconde portion (9), et
le rayonnement optique (7) n'est périodiquement couplé en entrée que pendant une partie des cycles d'acquisition d'image (40').

7. Procédé selon la revendication 6, **caractérisé en ce que** la première portion (8) et la seconde portion (9) sont éclairées par le second rayonnement optique (7) au cours d'un cycle d'étalonnage (21) suivant temporellement un cycle d'acquisition d'image (20).

8. Procédé selon l'une quelconque des revendications 6 à 7, **caractérisé en ce que**, pour déterminer l'état de la vitre, les données d'image de la première portion (8) et de la seconde portion (9) sont comparées à des valeurs de référence, dans lequel un masque est créé pour les données d'image de la seconde portion (9) sur la base de la comparaison des données d'image aux valeurs de référence, et dans lequel les données d'image de la seconde portion (9) sont masquées à l'aide du masque avant la détermination de l'état de la vitre.

9. Procédé selon l'une quelconque des revendications 6 à 8, **caractérisé en ce que** lors d'un cycle d'acquisition d'image (20) supplémentaire suivant, la première portion (8) et/ou la seconde portion (9) sont soumises à une modification de leur position et/ou de leur taille.

10. Procédé selon l'une quelconque des revendications 6 à 9, **caractérisé en ce que** le second rayonnement optique est couplé en entrée tous les n cycles d'acquisition d'image (40'), n étant supérieur à 10, et de façon particulièrement préférable, n se situant dans l'intervalle de 30 à 50.
